## Europäisches Patentamt

## European Patent Office

## Office européen des brevets

(11) Publication number: **0 246 028**
**B1**

## EUROPEAN PATENT SPECIFICATION

(45) Date of publication of patent specification: **16.08.90**

(21) Application number: **87304061.2**

(22) Date of filing: **06.05.87**

(51) Int. Cl.5: **F 16 B 13/04**

(54) Expansion fixing with axially crushable arrangement.

(30) Priority: **14.05.86 GB 8611720**

(43) Date of publication of application:
**19.11.87 Bulletin 87/47**

(45) Publication of the grant of the patent:
**16.08.90 Bulletin 90/33**

(84) Designated Contracting States:
**AT BE CH DE ES FR GB GR IT LI NL SE**

(56) References cited:
**CH-A- 338 589**
**CH-A- 344 832**
**CH-A- 591 024**
**DE-A-3 023 411**
**GB-A- 444 623**

(73) Proprietor: **The Rawlplug Company Limited**
**Rawlplug House London Road**
**Kingston-upon-Thames Surrey KT2 6NR (GB)**

(72) Inventor: **Waddell, George Muirhead**
**12 Burnbank Brae**
**Carluke Lanarkshire Scotland (GB)**
Inventor: **Abbott, George**
**40 Murend Road**
**Glasgow G44 Scotland (GB)**

(74) Representative: **Pattullo, Norman et al**
**Murgitroyd and Company Mitchell House 333**
**Bath Street**
**Glasgow G2 4ER (GB)**

Courier Press, Leamington Spa, England.

## Description

The invention relates to an expansion fixing with an axially crushable arrangement.

Expansion fixings with an axially crushable arrangement have been known for a considerable time, British specification 444 623 granted to John Joseph Rawlings and The Rawlplug Company Limited in 1936 illustrates several embodiments of a bolt anchor with a segmental metal sleeve and a member movable longitudinally therein to effect expansion of the sleeve, the bolt anchor incorporating a ferrule or cap by which the segmental parts of the sleeve are held together and having a part which can be deformed or collapsed by axial pressure exerted thereon as the bolt anchor is tightened.

The axially crushable arrangement is provided so that if the bolt anchor is initially located in a bore in concrete or masonry with the segmental metal sleeve, or a spacer provided thereabove, projecting slightly from the bore, that is to say projecting from the face of the concrete or masonry in which it is engaged, the projecting portion will not be immovable after the bolt has been initially tightened. Thus initial tightening of the bolt expands the inner end of the segmental metal sleeve and axially locates the segmental metal sleeve in the bore. If initially the segmental metal sleeve was located with a portion of the segmental metal sleeve or the spacer thereabove projecting from the bore then it would be impossible to tighten an article being clamped closely onto the face of the masonry or concrete since the projecting outer end of the segmental metal sleeve or spacer would prevent this, that is to say clamping pressure would not be applied through the article being clamped.

In later embodiments, developed since 1936, other means have been provided to enable the effective length of the segmental metal sleeve or segmental metal sleeve and spacer to be reduced. Thus the ends of the segments of the segmental metal sleeve have been tapered off to a small thickness or machined to give a projecting length of only small thickness or an end of a tubular spacer has been counterbored so that it has only slight wall thickness and thus can easily be crushed. Other proposals have incorporated alternate peripheral grooves in inner and outer diameters of the tubular spacer closely spaced to allow axial crushing.

Patent Application DE—A—3023411 discloses expanding sleeve bushes including one wherein a pair of projecting straps of the sleeve are inclined at an acute angle to an end face of the sleeve so as to project axially of the sleeve and towards one another, the two projecting straps being crushable back against the end face of the sleeve by an applied axial force.

According to the invention there is provided an expansion fixing comprising at least two segments forming a segmental metal sleeve with a portion provided at the outer end of each segment within the length thereof, while remaining of generally uniform thickness with the remainder of the segment, having a configuration such that it can readily be deformed to permit shortening of the segment if the segmental sleeve is subjected to an axial compression force, characterised in that said portion is formed to a configuration such that it has a pair of cantilever arms provided in a generally horseshoe shaped configuration which in an initial configuration have their free ends spaced apart by a gap and which, upon application of a determined axial force to the outer end of the segmental metal sleeve, will deform inwardly to bring the ends of the arms into abutment with one another to reduce the effective length of the segmental metal sleeve, the horseshoe configuration of the arms and abutment of the ends thereof providing a positive limit on crushing.

Advantageously the arms are of arcuate form.

The invention is diagrammatically illustrated by way of example in the accompanying drawing, in which:

Figure 1 is an elevation of one embodiment of an expansion fixing according to the invention;

Figure 2 is a sectional view taken on line II—II of Figure 1 showing one segment of a segmental metal sleeve of the expansion fixing of Figure 1;

Figure 3 shows a view similar to Figure 1 of the segment of Figures 1 and 2 after an axial force has been applied thereto; and

Figure 4 shows an alternative embodiment.

Referring to the drawing, an expansion fixing is provided in the form of an anchor bolt comprising a screw threaded bolt 1 with a hexagonal head 2, a flat washer 3, a tubular spacer 4, a segmental metal sleeve generally indicated at 5 and having three segments 6, a spring 7, a groove 8 in each segment 6 to receive the spring ring 7 and a tapered nut 9 engaged on the bolt 1 with its tapered outer surface in engagement with a tapered inner face at the inner end of each of the three segments 6.

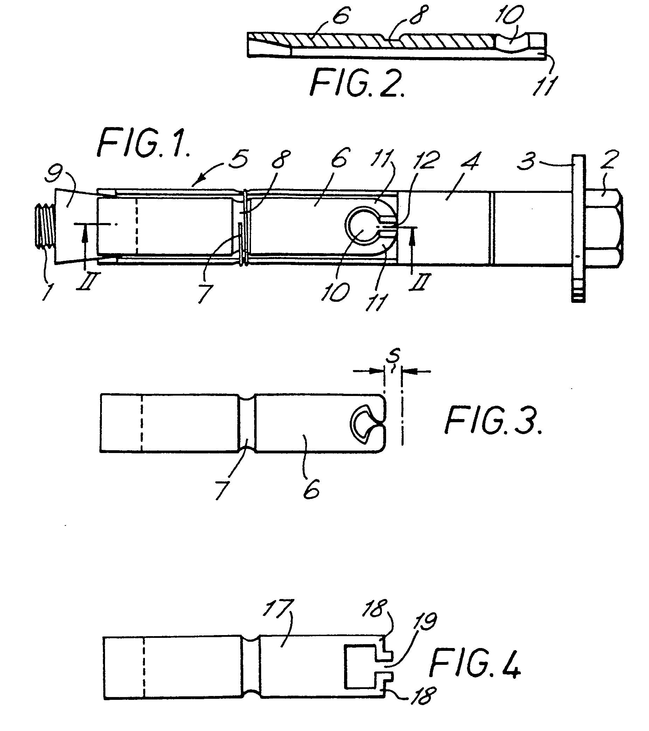

At its end adjacent to the tubular spacer 4, each segment 6 is formed to a generally horseshoe configuration such that it has a generally circular aperture 10 passing therethrough and defining a pair of generally arcuate arms 11 which in the initial configuration shown in Figures 1 and 2 have their free ends spaced apart from one another by a gap 12.

If the sleeve 5 is placed under axial compression during tightening of the anchor bolt, the arms 11 will deform inwardly to the position shown in Figure 3 to close the gap 12 and allow the axial length of the sleeve 5 to be reduced by the distance indicated at S.

Figure 4 shows an embodiment in which a segment 17 has two arms 18 in a rectangular configuration and with their free ends spaced apart by a gap 19. Instead of the bolt and nut shown, a taper head bolt with a separate nut at the outer end could be used. If desired the tubular spacer could be omitted.

## Claims

1. An expansion fixing comprising at least two segments (6, 17) forming a segmental metal sleeve with a portion provided at the outer end of each segment within the length thereof, while remaining of generally uniform thickness with the remainder of the segment, having a configuration such that it can readily be deformed to permit shortening of the segment (6, 17) if the segmental sleeve is subjected to an axial compression force, characterised in that said portion is formed to a configuration such that it has a pair of cantilever arms (11, 18) provided in a generally horseshoe shaped configuration which in an initial configuration have their free ends spaced apart by a gap (12, 19) and which, upon application of a determined axial force to the outer end of the segmental metal sleeve, will deform inwardly to bring the ends of the arms (11, 18) into abutment with one another to reduce the effective length of the segmental metal sleeve, the horseshoe configuration of the arms (11, 18) and abutment of the ends thereof providing a positive limit on crushing.

2. An expansion fixing according to claim 1, in which the arms (11) are of arcuate form.

## Patentansprüche

1. Expansionsbefestigung mit wenigstens zwei Segmenten (6, 17) die eine segmentierte Metallhülse bilden, bei der ein Abschnitt an dem äußeren Ende jedes Segments innerhalb seiner Länge unter Beibehaltung einer im wesentlichen einheitlichen Dicke mit dem Rest des Segments eine solche Ausbildung hat, daß er unmittelbar verformt werden kann, um eine Verkürzung des Segments (6, 17) zu erlauben, wenn die segmentierte Metallhülse einer axialen Druckkraft ausgesetzt wird, dadurch gekennzeichnet, daß der Abschnitt mit einer solchen Ausbildung versehen ist, daß er zwei Auslegearme (11, 18) mit einer im wesentlichen hufeisenförmigen Gestaltung hat, deren freie Enden in einem anfänglichen Zustand durch einen Spalt (12, 19) voneinander beabstandet sind und welche sich bei der Einwirkung einer vorbestimmten Axialkraft auf das äußere Ende der segmentierten Metallhülse nach innen verformen, um die Enden der Arme (11, 18) miteinander in Berührung zu bringen und die wirksame Länge der segmentierten Metallhülse zu verkürzen, wobei die hufeisenförmige Gestaltung der Arme (11, 18) und diese Berührung ihrer Enden eine positive Begrenzung der Verformung ergeben.

2. Expansionsbefestigung nach Anspruch 1, bei welcher die Arme (11) eine gekrümmte Form haben.

## Revendications

1. Dispositif de fixation à expansion, comportant au moins deux segments (6, 17) formant un manchon segmenté métallique ayant une partie située à l'extrémité extérieure de chaque segment dans la longueur du manchon, partie qui tout en restant d'une épaisseur généralement uniforme avec le reste du segment, a une forme telle qu'elle peut être aisément déformée pour permettre un raccourcissement du segment (6, 17) si le manchon segmenté est soumis à une force de compression axiale, caractérisé en ce que ladite partie forme deux bras en porte-à-faux (11, 18) disposés sensiblement en fer à cheval de sorte que dans une configuration initiale leurs extrémités libres soient séparées par un intervalle (12, 19) et que, lorsqu'une force axiale déterminée est appliquée à l'extrémité extérieure du manchon métallique segmenté, les extrémités des bras (11, 18) sont déformées vers l'intérieur et viennent en butée l'une contre l'autre de manière à réduire la longueur effective du manchon métallique segmenté, la forme en fer à cheval des bras (11, 18) et le contact de butée de leurs extrémités imposant une limite positive à l'écrasement.

2. Dispositif de fixation selon la revendication 1, dans lequel les bras (11) sont courbes.

FIG.2.

FIG.1.

FIG.3.

FIG.4